# EUROPEAN PATENT SPECIFICATION

(11) **EP 2 439 088 B1**
(45) Date of publication and mention of the grant of the patent: **24.04.2013**
(21) Application number: 10186408.0
(22) Date of filing: 04.10.2010
(51) Int. Cl.: B60H 1/00

(54) **Energy-efficient controlling of air conditioning system**
Energieeffiziente Steuerung eines Klimaanlagensystems
Contrôle d'un système de climatisation d'air à haute efficacité énergétique

(43) Date of publication of application: 11.04.2012
(73) Proprietor: Harman Becker Automotive Systems GmbH, 76307 Karlsbad (DE)
(72) Inventor: Scholl, Kay-Ulrich, 76307 Karlsbad (DE)
(74) Representative: Bertsch, Florian Oliver

(56) References cited:
- EP-A1- 2 163 413
- US-A- 5 275 012
- US-A- 5 555 737

## Description

The present application relates to an air conditioning system of at least partly electrically driven vehicle and to a method for operating the air conditioning system.

### Related Art

An air conditioning system of an electrically driven vehicle also drains the battery regardless of whether it has to warm up or cool down the vehicle interior, especially if the same strategies are used as for vehicles with combustion engines. In the case of at least partly electrically driven vehicles the operating range of the vehicle is an important factor, as the operating range of an at least partly electrically driven vehicle is normally much smaller than the operating range of a vehicle with a combustion engine. The power consumption of modules provided in the vehicle that are not needed to drive the vehicle has to be minimized. An air conditioning system is an element in the vehicle that has a fairly large power consumption compared to other modules provided in the vehicle.

From EP 2 163 413 A1 an air conditioning control device for a vehicle with an air conditioner is known. A pre-air-conditioning control section for starting operation of the air conditioner at an air conditioning start time before a planned departure time is provided.

Accordingly, a need exists to provide an air conditioning system with which the energy consumption provided by the vehicle battery is minimised.

### Summary

This need is met by the features of the independent claims. In the dependent claims preferred embodiments of the invention are described.

According to a first aspect, an air conditioning system of an at least partly electrically driven vehicle is provided, the system comprising an air conditioning module controlling a temperature inside the vehicle. An air conditioning controller controls an operation of the air conditioning module. Furthermore, a detector is provided configured to detect when a vehicle battery that is used for driving the vehicle is charged by supplied energy. When the detector detects that the vehicle battery is being charged, the air conditioning controller uses the supplied energy directly to drive the air conditioning module. Thus, when the vehicle battery is being charged, instead of charging the vehicle battery and then using the vehicle battery to operate the air conditioning system, the supplied energy is at least partly used to drive the air conditioning module. This does not mean that the complete energy supplied to the battery is used for operating the air conditioning module. However, the energy that is needed to operate the air conditioning module is deduced from the energy supplied to the vehicle battery instead of charging the battery. This part of the supplied energy is used to directly drive the air conditioning module. As buffering of the electrical energy into batteries or super caps results in a loss being imposed, it is more efficient to directly drive the air conditioning module with the supplied energy instead of storing it first in the battery and then using this stored energy in the battery to drive the air conditioning module.

For at least partly electrically driven vehicles energy may be supplied to the battery in two different situations: the energy is either supplied by a charging station when the vehicle is at rest directly before the vehicle is used, or energy is supplied to the battery using the motor as a generator when the vehicle is driving and when a brake of the vehicle is activated. For determining whether energy supplied to a vehicle, when the vehicle is not running, is used to drive the air conditioning module a database may be provided containing a timetable in which information is contained on when the vehicle will be used next. The detector can now be configured to detect if the vehicle engine is running or not and when the detector detects that the vehicle engine is not running, the air conditioning controller uses the supplied energy to drive the air conditioning module in dependence on the fact of when the vehicle will be used next. When the vehicle is not running the supplied energy is coming directly from a charging station. When it can be deduced from the timetable that the vehicle will be used in the near future, e.g. within a predetermined period of time, the vehicle interior can be preconditioned as long as it in the charging mode. The energy that is needed to initially set the interior of the vehicle to a desired temperature does not unload the battery as it comes directly from the charging station.

During driving the air conditioning controller is configured to use route information provided by a navigation module in order to determine when and how the air conditioning module will be operated. A navigation module usually contains map data that are used to calculate a route to a desired destination. The map data includes altitude information, speed limits and information about the curvature. As a consequence it can be predicted when the vehicle brake will be activated if the vehicle is driving along the calculated route. Based on the braking events the amount of energy supplied to the vehicle battery can be predicted. The amount of energy and the frequency at which energy is supplied to the battery can then be used to determine whether the air conditioning module can be operated only by energy not provided by the battery.

One possible solution to drive the air conditioning system would be that the air conditioning controller only operates the air conditioning module when the detector detects energy being supplied to the battery, this energy being partly used to directly drive the air conditioning module. When energy is not being supplied to the battery, the air conditioning module would not operate at all. In an alternative solution it is also possible to reduce the power of the air conditioning module when no energy is supplied to the battery so that the air conditioning module has to be operated using the energy stored in the battery.

The invention furthermore relates to a method for operating the air conditioning system on which a charging of the vehicle battery by supplied energy is detected, and when it is detected that the vehicle is being charged, the supplied energy is used directly to drive the air conditioning module.

### Brief description of the drawings

The invention will be described in further detail with reference to the accompanying drawings, in which
Fig. 1 is a systematic view of an air conditioning system that can be operated with minimized energy provided by a vehicle battery,
Fig. 2 shows a flow-chart containing steps carried out in operating the air conditioning system of Fig. 1, and
Fig. 3 shows a flow-chart containing the steps of an alternative way how to operate the air conditioning system.

### Detailed description

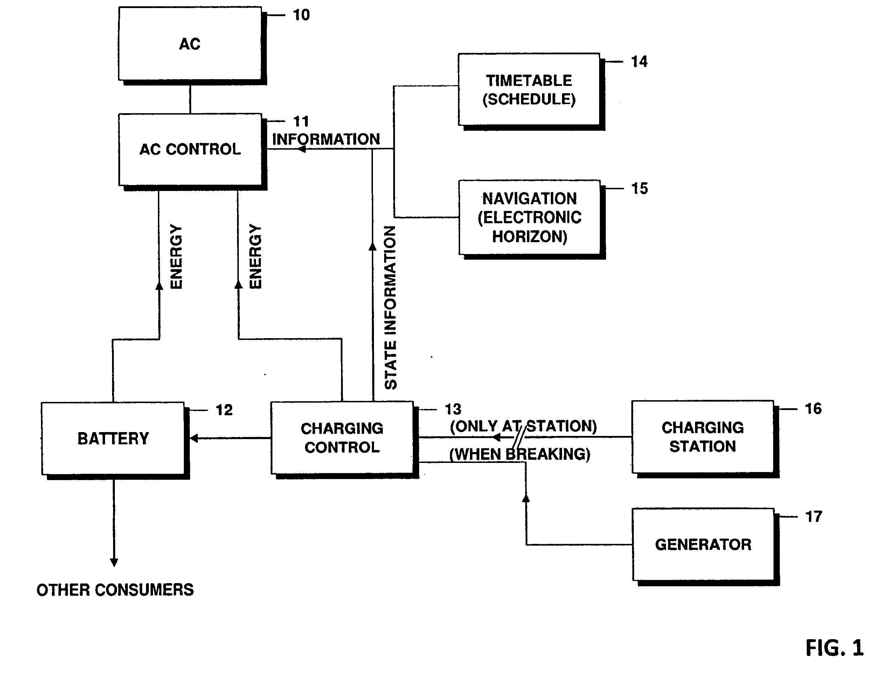

In Fig. 1 a system is shown allowing an energy-efficient controlling of an air conditioning system. The system comprises an air conditioning module 10 that is used to warm up or cool down a vehicle interior (not shown). The air conditioning module is controlled by an air conditioning controller 11 that controls the operating of the air conditioning module 10. A user of the air conditioning system shown in Fig. 1 can set a desired temperature using an input unit (not shown), the air conditioning controller controlling the air conditioning module in such a way that the temperature desired by the user inside the vehicle will be reached.

Furthermore, a vehicle battery 12 is shown, the battery being the battery that is used to at least partly drive the vehicle. The vehicle may be a purely electrically driven vehicle or a hybrid vehicle that is driven by a combustion engine and at least partly by the battery 12. The battery 12 is charged either by a charging station 16 when the vehicle is not moving using a wired connection between the charging station and the vehicle battery. The vehicle can furthermore be charged during driving by a generator 17 provided in the vehicle that generates power when the vehicle is running, e.g. during braking or in other driving situations such as downhill driving. The supplied energy is symbolized by the arrow shown in Fig. 1. The air conditioning system furthermore comprises a charging control unit/detector 13 that is configured to detect when energy is being supplied to the vehicle battery. In the example shown the detector is provided as a separate unit. However, it should be understood that the detector 13 may also be provided in the air conditioning controller 11 and may be designed as a separate entity or may be part of another entity provided in the vehicle. When the detector detects that energy is being supplied to the battery the air conditioning controller is configured such as to use part of the supplied energy to directly operate the air conditioning module 10 instead of storing it in the battery first and then using the stored energy to operate the air conditioning module.

The detector 13 can furthermore detect whether the vehicle engine is running or not. When the vehicle is not running and energy is being supplied to the battery, the supplied energy is transmitted from a charging station. The system shown in Fig. 1 can furthermore comprise a database with a timetable 14 from which the operating times of the vehicle can be deduced. The timetable 14 can be part of a personal digital assistant, PDA, of the driver or of a mobile phone of the driver from where it can be deduced when the vehicle will be probably be used next. The timetable can further include information about the usual driving behaviour in the past. By way of example the timetable can contain information that the vehicle is usually used in the morning to drive to work and in the afternoon to drive back.

If it is possible to deduce from the timetable that the vehicle will be used in a predetermined period of time, e.g. within the next hour, the air conditioning controller 11 can use the amount of supplied energy needed to operate the air conditioning module 10 directly from the charging station. The vehicle may furthermore contain a navigation module 15 that is used to calculate a route to a desired destination. As it is known to those skilled in the art the navigation module 15 uses map data to calculate the best route to a destination provided by the user. When a route has been calculated by the navigation module or when the driving direction is clear as there are no possibilities to branch away from the present route, the map data can be used to determine when energy will be supplied to the battery with a high likelihood. The map data can be used to predict braking situations, the braking allowing the generator of the at least partly electrically driven vehicle to generate energy supplied to the battery. The map data allows a consideration of altitude profiles and up-coming speed limits. By way of example when it can be deduced from the map data that an urban agglomeration will be reached at a certain part of the route where the vehicle velocity has to be drastically reduced, the braking induced energy can be used to drive the air conditioning module 10.

The air conditioning controller can operate the air conditioning module in different operating modes. In one operating mode the air conditioning module is only used when energy is being supplied to the battery. If the vehicle cabin should be kept at a predetermined temperature level, the air conditioning module need not be operated continuously. It might be sufficient to only temporarily operate the air conditioning module to obtain a certain temperature level. In another embodiment, if it is detected that the desired temperature will not be obtained when the air conditioning module is only used where energy is being supplied to the battery, another operating mode can be selected where a reduced energy consumption mode is used when energy is not being supplied to the battery, a higher energy consumption mode being used when energy is being supplied to the battery.

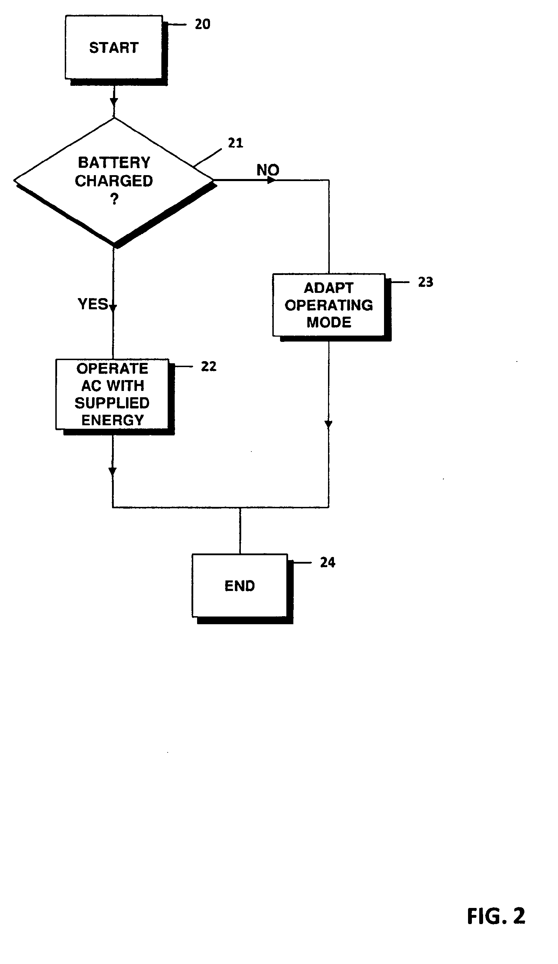

In connection with Fig. 2 the basic operating mode of the air conditioning system shown in Fig. 1 is summarized. The method starts in step 20 and in step 21 it is detected whether the battery 12 is being charged by supplied energy. If the supplied energy is detected in step 21 the air conditioning module can be operated using some of the supplied energy directly to drive the air conditioning module (step 22). If it is detected that energy is not being supplied to the battery the operating mode can be adapted accordingly in step 23. This can mean that the air conditioning module is turned off when energy is not being supplied to the battery, or this can mean that energy supplied by the battery is used to drive the air conditioning module. The air conditioning module can then be operated using the same amount of energy as provided in the operating mode 22, or another operating mode may be selected in which the air conditioning module works in an operating mode with reduced energy consumption. The method ends in step 24.

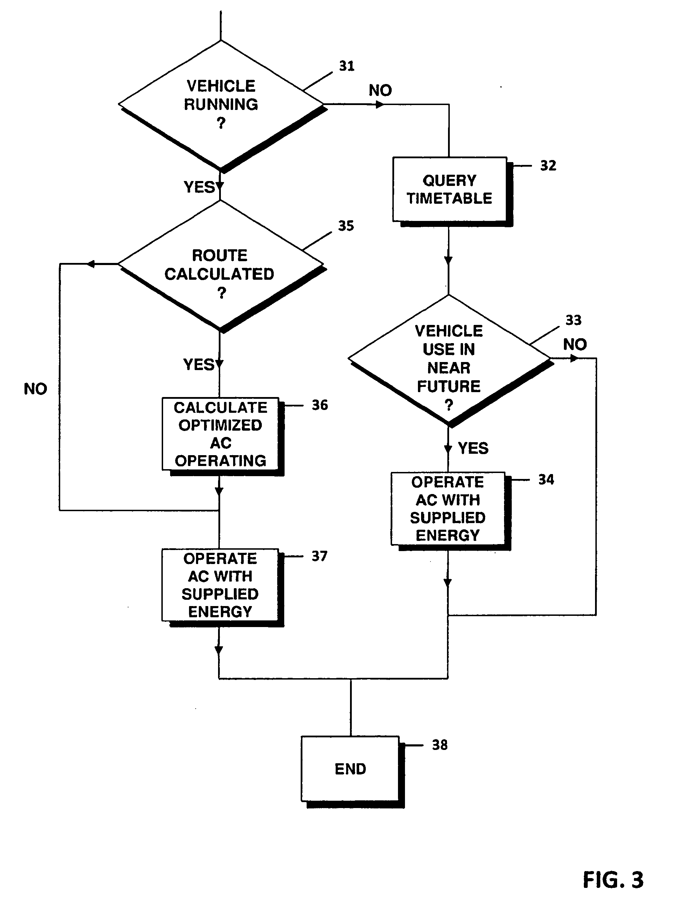

A more detailed view of the operation of the air conditioning module is shown in Fig. 3. Fig. 3 shows in more detail what happens when it has been detected in step 21 of Fig. 2 that the battery is being charged by supplied energy. Thus, when the supply of energy is confirmed in step 21 the air conditioning controller may ask in step 31 whether the vehicle is running or not. If the vehicle is not running, it can be concluded that the supplied energy is coming directly from a charging station and that the vehicle is presently not being used. In this situation the timetable 14 can be queried in step 32 and it can be asked in step 33 whether the vehicle will be used in the near future. If it can deduce from the timetable that the vehicle will be used in the near future, the air conditioning module can be operated with the supplied energy in step 34 without storing the supplied energy that is used for the air conditioning module in the battery. If it is detected in step 33 that the vehicle will not be used, the air conditioning module will not be operated.

If it is detected in step 31 that the vehicle is running, it can be asked in step 35 whether a route has been calculated in the navigation module 15 or whether the navigation module is able to predict the driving route. If a route has been calculated or the route can be predicted, optimized air conditioning operation can be calculated in step 36. One example of the optimized air conditioning operation can be that the air conditioning module is only used when energy is being supplied to the vehicle. In step 37 the air conditioning module can then be operated using the supplied energy. When no route has been determined in step 35 the air conditioning module can also be operated only when energy is being supplied to the battery. In another embodiment it is also possible to additionally operate the air conditioning module when energy is not being supplied to the vehicle battery. The method ends in step 38. Summarizing as discussed above, the invention provides an alternative air conditioning strategy for at least partly electrically driven vehicles. Especially the use of energy stored in the vehicle battery used for driving the vehicle is either minimized or even completely avoided.

## Claims

1. An air conditioning system of an at least partly electrically driven vehicle, the system comprising:
- an air conditioning module (10) controlling a temperature inside the vehicle,
- an air conditioning controller (11) controlling an operation of the air conditioning module,
- a detector (13) configured to detect when a vehicle battery (12) that is used for driving the vehicle is being charged by supplied energy, wherein when the detector (13) detects that the vehicle battery (12) is being charged, the air conditioning controller uses the supplied energy directly to drive the air conditioning module, **characterized in that** the air conditioning controller (11) is configured to use route information provided by a navigation module (15) in order to determine when and how the air conditioning module will be operated during driving.

2. The air conditioning system according to claim 1, further comprising a database containing a timetable (14) in which information is provided on when the vehicle will be used next, wherein the detector (13) is further configured to detect if a vehicle engine is running or not, wherein when the detector (13) detects that the vehicle engine is not running, the air conditioning controller (11) uses the supplied energy to drive the air conditioning module in dependence on the fact of when the vehicle will be used next.

3. The air conditioning system according to any of the preceding claims, wherein the air conditioning controller (11) is configured to only operated the air conditioning module (10) when the detector (13) detects that energy is supplied to the battery.

4. A method for operating an air conditioning module provided in an at least partly electrically driven vehicle and used for controlling a temperature inside the vehicle, the method comprising the steps of:
- detecting a charging of a vehicle battery (12) by supplied energy, the battery being used to drive the vehicle , wherein when it is detected that the vehicle is being charged, the supplied energy is used directly to drive the air conditioning module, **characterized by**
- using route information provided by a navigation module (15) in order to determine when and how the air conditioning module will be operated during driving.

5. The method according to claim 4, further comprising the step of detecting whether a vehicle engine is running or not, wherein when it is detected that the vehicle engine is not running, information is retrieved from a timetable (14) allowing a determination of when the vehicle will be used next, wherein the supplied energy is used to drive the air conditioning module (11) in dependence on the retrieved information.

6. The method according to step 5, wherein when the retrieved information allows a determination that the vehicle will be started within a predetermined time period the air conditioning module (10) will be started.

7. The method according to any of claims 4 to 6, wherein the air conditioning module (10) will only be operated when energy is supplied to the battery.

## Patentansprüche

1. Klimaanlagensystem eines mindestens teilweise elektrisch angetriebenen Fahrzeugs, wobei das System Folgendes umfasst:
- ein Klimaanlagenmodul (10), das eine Temperatur im Inneren des Fahrzeugs steuert,
- eine Klimaanlagensteuerung (11), die den Betrieb des Klimaanlagenmoduls steuert,
- einen Detektor (13), der so konfiguriert ist, dass er feststellt, wenn eine Fahrzeugbatterie (12), die zum Fahren des Fahrzeugs verwendet wird, mit zugelieferter Energie geladen wird, wobei die Klimaanlagensteuerung die zugelieferte Energie direkt zum Antreiben des Klimaanlagenmoduls verwendet, wenn der Detektor (13) feststellt, dass die Fahrzeugbatterie (12) geladen wird,
**dadurch gekennzeichnet dass** die Klimaanlagensteuerung (11) zur Verwendung von Routeninformationen konfiguriert ist, die von einem Navigationsmodul (15) bereitgestellt werden, um festzustellen, wann und wie das Klimaanlagenmodul während der Fahrt betrieben werden wird.

2. Klimaanlagensystem nach Anspruch 1, das ferner eine Datenbank mit einem Zeitplan (14) umfasst, in dem Informationen darüber bereitgestellt werden, wann das Fahrzeug das nächste Mal benutzt werden wird, wobei der Detektor (13) ferner so konfiguriert ist, dass er feststellt, ob der Fahrzeugmotor läuft oder nicht, wobei die Klimaanlagensteuerung (11), falls der Detektor (13) feststellt, dass der Fahrzeugmotor nicht läuft, die zugeführte Energie dazu verwendet, das Klimaanlagenmodul abhängig davon anzutreiben, wann das Fahrzeug zum nächsten Mal benutzt wird.

3. Klimaanlagensystem nach einem der vorhergehenden Ansprüche, wobei die Klimaanlagensteuerung (11) so konfiguriert ist, dass es das Klimaanlagenmodul (10) nur betreibt, wenn der Detektor (13) feststellt, dass der Batterie Energie zugeführt wird.

4. Verfahren zum Betreiben eines Klimaanlagenmoduls, das in einem mindestens teilweise elektrisch betriebenen Fahrzeug bereitgestellt und zum Steuern einer Temperatur im Inneren des Fahrzeugs verwendet wird, wobei das Verfahren die folgenden Schritte umfasst:
- Feststellen des Ladens einer Fahrzeugbatterie (12) durch zugeführte Energie, wobei die Batterie dazu verwendet wird, das Fahrzeug anzutreiben, wobei die zugelieferte Energie direkt um Antreiben des Klimaanlagenmoduls verwendet, wenn feststellt wird, dass das Fahrzeug geladen wird; **gekennzeichnet durch**
- die Verwendung von Routeninformationen, die von einem Navigationsmodul (15) bereitgestellt werden, um festzustellen, wann und wie das Klimaanlagenmodul während der Fahrt betrieben werden wird.

5. Verfahren nach Anspruch 4, das ferner einen Schritt umfasst, in dem festgestellt wird, ob der Fahrzeugmotor läuft oder nicht, wobei, falls festgestellt wird, dass der Fahrzeugmotor nicht läuft, Informationen von einem Zeitplan (14) abgerufen werden, anhand derer festgestellt werden kann, wann das Fahrzeug das nächste Mal benutzt werden wird, wobei die zugeführte Energie dazu verwendet wird, das Klimaanlagenmodul (11) abhängig von den abgerufenen Informationen anzutreiben.

6. Verfahren nach Schritt 5, wobei das Klimaanlagenmodul (10) gestartet wird, wenn anhand der abgerufenen Informationen festgestellt werden kann, dass das Fahrzeug innerhalb eines vorbestimmten Zeitraums benutzt werden wird.

7. Verfahren nach einem der Ansprüche 4 bis 6, wobei das Klimaanlagenmodul (10) nur betrieben wird, wenn der Batterie Energie zugeführt wird.

## Revendications

1. Système de climatisation d'un véhicule au moins partiellement à propulsion électrique, le système comprenant :
- un module de climatisation (10) contrôlant la température à l'intérieur d'un véhicule,
- une commande de climatisation (11) pour commander un fonctionnement du module de climatisation,
- un détecteur(13) configuré pour détecter à quel moment une batterie de véhicule (12) qui est utilisée pour propulser le véhicule est chargée par l'énergie fournie, dans lequel le détecteur (13) détecte que la batterie de véhicule (12) est en charge, la commande de climatisation utilise directement l'énergie fournie pour actionner le module de climatisation, **caractérisé en ce que** la commande de climatisation (11) est configurée pour utiliser les informations routières fournies par un module de navigation (15) pour déterminer quand et comment le module de climatisation sera utilisé pendant la conduite.

2. Système de climatisation selon la revendication 1, contenant également une base de données contenant un emploi de temps (14) dans lequel est fournie des renseignements sur la prochaine utilisation du véhicule, dans lequel le détecteur (13) est également configuré pour détecter si le moteur est en marche ou pas, dans lequel, lorsque le moteur du véhicule n'est pas en marche, la commande de climatisation (11) utilise l'énergie fournie pour actionner le module de climatisation en fonction du renseignement sur la prochaine utilisation du véhicule.

3. Système de climatisation selon l'une quelconque des revendications précédentes, dans lequel la commande de climatisation (11) est configurée seulement pour faire fonctionner le module de climatisation (10) lorsque le détecteur (13) détecte que l'énergie est fournie à la batterie.

4. Méthode pour faire fonctionner un module de climatisation fourni dans un véhicule au moins partiellement à propulsion électrique et utilisée pour contrôler une température à l'intérieur du véhicule, la méthode comprenant les étapes :
- de détection de la charge de la batterie d'un véhicule (12) par l'énergie fournie, la batterie étant utilisée pour propulser le véhicule, dans lequel quand il est détecté que le véhicule est en charge, l'énergie fournie est utilisée directement pour faire fonctionner le module de climatisation, **caractérisé par**
- l'utilisation des informations routières fournies par un module de navigation (15) afin de déterminer quand et comment le module de climatisation sera utilisé pendant la conduite.

5. Méthode selon la revendication 4, comprenant aussi l'étape de détection de l'état de fonctionnement d'un moteur, dans lequel lorsqu'il est détecté que le moteur du véhicule n'est pas en marche, l'information est extraite d'un emploi du temps (14) permettant de déterminer le moment où le véhicule sera utilisé la prochaine fois, dans lequel l'énergie fournie est utilisée pour faire fonctionner le module de climatisation (11) en fonction des informations extraites.

6. Méthode selon l'étape 5, dans lequel lorsque l'information extraite permet une estimation du moment où le véhicule sera mis en marche dans un délai prédéterminé le module de climatisation (10) sera actionné.

7. Méthode selon l'une quelconque des revendications 4 à 6, dans lequel le module de climatisation (10) ne sera actionné que lorsque l'énergie est fournie à la batterie.
